# EUROPÄISCHE PATENTSCHRIFT

(11) **EP 0 399 106 B1**
(45) Veröffentlichungstag und Bekanntmachung des Hinweises auf die Patenterteilung: **28.04.1993**
(21) Anmeldenummer: 89123240.7
(22) Anmeldetag: 15.12.1989
(51) Int. Cl.: F16H 61/26, G05G 25/02

(54) **Getriebeschaltstange mit Schwingungsdämpfer**
Control linkage for gearshift with vibration damper
Arbre de commande de changement de vitesse avec amortisseur de vibrations

(30) Priorität: 20.05.1989 DE 3916569
(43) Veröffentlichungstag der Anmeldung: 28.11.1990
(73) Patentinhaber: FORD-WERKE AKTIENGESELLSCHAFT, 50725 Köln (DE); FORD FRANCE S. A., 92506 Rueil-Malmaison (FR); FORD MOTOR COMPANY LIMITED, Brentwood, Essex CM13 3BW (GB)
(72) Erfinder: Wilhelmy, Egon, D-5340 Bad Honnef 1 (DE)
(74) Vertreter: Messulam, Alec Moses

(56) Entgegenhaltungen:
- EP-A- 0 297 359
- DE-A- 3 101 671
- DE-A- 3 634 174
- FR-A- 2 210 155

## Beschreibung

Die Erfindung bezieht sich auf eine Getriebeschaltstange mit Schwingungsdämpfer, insbesondere für Kraftfahrzeuge, der im Oberbegriff des Patentanspruches 1 erläuterten Art.

Aus der DE-A-36 34 174 ist eine Getriebeschaltstange mit Schwingungsdämpfer, insbesondere für Kraftfahrzeuge bekannt, die aus zwei miteinander fluchtenden, rohrförmigen Schaltstangenabschnitten besteht, die axiale und drehende Schaltbewegungen übertragen und wobei an den Schaltstangenabschnitten elastische Federelemente angeordnete sind und ein die beiden Schaltstangenabschnitte koaxial umfassendes steifes Verbindungsglied vorgesehen ist.

Die bekannte Getriebeschaltstange mit Schwingungsdämpfer weist den Nachteil auf, daß ihr Aufbau verhältnismäßig aufwendig ist.

So ist an einem Schaltstangenabschnitt ein Gelenk befestigt, das als Universalgelenk ausgebildet und über Schwerspannstifte mit dem anderen Schaltstangenabschnitt verbunden ist. Die beiden Schaltstangenabschnitte sind unter Zwischenschaltung von elastischen Federelementen in Form von O-Ringen von zwei rohrförmigen Halbschalen umfaßt, die wieder über ein die beiden Schaltstangenabschnitte koaxial umfassendes rohrförmiges Verbindungsglied zusammengehalten werden.

Die bekannte Getriebeschaltstange ist in erster Linie in der Lage, Schwenkbewegungen zwischen den beiden Schaltstangenabschnitten durch radiale Verformung der elastischen Federelemente zu dämpfen, eine Dämpfung von axialen und radialen Bewegungen kann jedoch durch die kreuzgelenkartige Verbindung mittels der Schwerspannstifte nicht erreicht werden.

Die Aufgabe der Erfindung ist es, eine Getriebeschaltstange mit Schwingungsdämpfer, insbesondere für Kraftfahrzeuge, der im Oberbegriff des Patentanspruches erläuterten Art derart zu verbessern, daß eine kontrollierte Dämpfung von axialen Schwingungsbewegungen ebenso möglich wird wie eine kontrollierte Dämpfung von radialen Schwingungsbewegungen.

Gemäß der Erfindung wird diese Aufgabe gelöst, indem eine Getriebeschaltstange mit Schwingungsdämpfer, insbesondere für Kraftfahrzeuge, der im Oberbegriff des Patentanspruches erläuterten Art, die im Kennzeichenteil des Patentanspruches aufgezeigten Merkmale aufweist.

Dadurch, daß die miteinander fluchtenden, rohrförmigen Schaltstangenabschnitte einander über eine bestimmte Länge überlappend angeordnet sind, indem sie wechselseitig, hälftig ausgeschnitten sind und Halbschalen bilden, wobei in der einen Halbschale des einen Stangenabschnittes zwei in einem bestimmten Abstand angeordnete etwa kreisförmige Anschlagscheiben befestigt sind und in der anderen Halbschale des anderen Schaltstangenabschnittes eine in der Mitte zwischen den beiden Anschlagscheiben in der einen Halbschale angeordnete etwa kreisförmige Anschlagscheibe befestigt ist und in den zwischen den Anschlagscheiben gebildeten Räumen elastische Dämpfungskörper in Kegel-, Zylinder- oder Kugelform angeordnet sind und die beiden Schaltstangenabschnitte über einen zwischen den Längskanten ihrer Halbschalen angeordneten elastischen Dämpfungsstreifen aneinanderliegen, werden axiale Schwingungsbewegungen durch die elastischen Dämpfungskörper gedämpft und radiale Schwingungsbewegungen durch den elastischen Dämpfungsstreifen zwischen den Längskanten der Halbschalen aufgenommen.

Durch die Ausbildung der elastischen Dämpfungskörper als Kegel-, Zylinder- oder Kugelkörper kann die erwünschte Schwingungsdämpfung in günstiger Weise ausgelegt und angepaßt werden. Der zweckmäßigerweise als Rahmen ausgebildete elastische Dämpfungsstreifen zwischen den Längskanten der Halbschalen verhindert ein störendes Klappern durch radiale Schwingungsbewegungen, sichert jedoch durch ausreichende Steifheit eine sichere Übertragung der drehenden Schaltbewegungen.

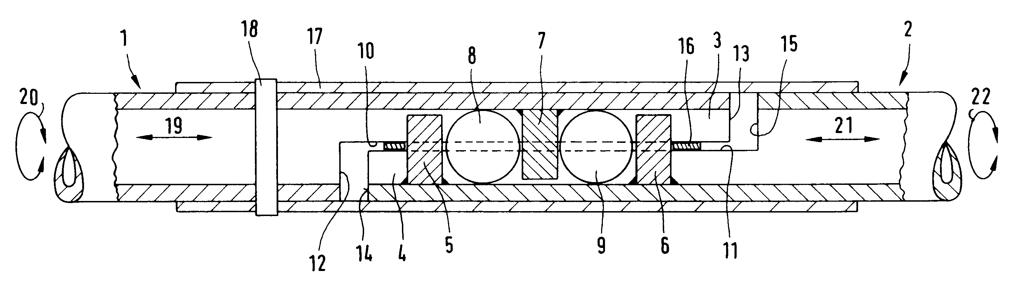

Die Erfindung wird anhand eines in der beiliegenden Zeichnung gezeigten Ausführungsbeispieles näher erläutert. Es zeigt:
Die Figur einen vertikalen Schnitt durch eine Getriebeschaltstange mit Schwingungsdämpfer.

Die in der Figur gezeigte Getriebeschaltstange mit Schwingungsdämpfer, insbesondere für Kraftfahrzeuge besteht aus einem ersten rohrförmigen Schaltstangenabschnitt 1, der fluchtend zu einem zweiten rohrförmigen Schaltstangenabschnitt 2 angeordnet ist. Die beiden Schaltstangenabschnitte 1 und 2 überlappen einander über eine bestimmte Länge indem sie wechselseitig hälftig ausgeschnitten sind und zylindrische Halbschalen 3 und 4 bilden.

In der einen Halbschale 4 des einen Stangenabschnittes 2 sind zwei in einem bestimmten Abstand angeordnete, etwa kreisförmige Anschlagscheiben 5 und 6 durch Schweißen, Bukkelschweißen oder Löten befestigt.

In der anderen Halbschale 3 des anderen Schaltstangenabschnittes 1 ist eine in der Mitte zwischen den beiden Anschlagscheiben 5 und 6 in der einen Halbschale 4 angeordnete etwa kreisförmige Anschlagscheibe 7 angeordnet und durch Schweißen, Buckelschweißen oder Löten befestigt.

In den zwischen den Anschlagscheiben 5 und 7 bzw. 6 und 7 gebildeten Räumen sind elastische Dämpfungskörper 8 und 9 in Kugelform angeordnet. Diese Dämpfungskörper 8 und 9 können auch in Zylinderform oder Kegelform gestaltet werden um eine besondere Charakteristik für die axiale Dämpfung zu erzielen.

Die beiden Halbschalen 3 und 4 weisen in ihren überlappenden Bereichen Längskanten 10 und 11 und Endkanten 12 und 13 bzw. 14 und 15 auf.

Zwischen den Längskanten 10 und 11 der Halbschalen 3 und 4 ist ein elastischer Dämpfungsstreifen 16 angeordnet, der in Draufsicht als rechteckiger Rahmen ausgebildet ist.

Die beiden Halbschalen 3 und 4 werden nach dem Einsetzen der elastischen Dämpfungskörper 8 und 9 und des elastischen Dämpfungsstreifens 16 zusammengefügt und durch ein die beiden Halbschalen 3 und 4 koaxial umfassendes rohrförmiges Verbindungsglied 17 gegen Auseinanderfallen gesichert. Das Verbindungsglied 17 kann beispielsweise am einen Schaltstangenabschnitt 1 durch einen Spannstift 18 befestigt sein, es sind jedoch auch andere Befestigungsarten, wie Schweißen, Einrollen oder dergleichen, möglich.

Die Funktionsweise der Getriebeschaltstange mit Schwenkungsdämpfer wird nachfolgend erläutert.

Denkt man sich den Schaltstangenabschnitt 1 mit einer Getriebeschaltwelle verbunden und den Schaltstangenabschnitt 2 mit einer vom Handschalthebel kommenden Schaltwelle verbunden, so können vom Getriebe her, das normalerweise mit dem Antriebsaggregat, dem Verbrennungsmotor fest verbunden ist, axiale Schwingungsbewegungen und auch radiale Schwingungsbewegungen übertragen werden, die bei fehlender Schwingungsdämpfung zu einem störenden Schwingen des Handschalthebels führen.

Am linken Schaltstangenabschnitt 1 sind diese axialen Schwingungsbewegungen durch einen Doppelpfeil 19 und die radialen Schwingungsbewegungen durch einen drehenden Pfeil 20 angedeutet.

In der gezeigten Ausführungsform ist zwischen den Anschlagscheiben 7 bzw. 5 und 6 und den Dämpfungskörpern 8 und 9 Spiel, so daß Schwingungen mit geringer Amplitude keine Auswirkung auf den rechten Schaltstangenabschnitt 2 ausüben.

Bei größeren Schwingungsamplituden treten die Dämpfungskörper 8 und 9 in Aktion.

Am rechten Schaltstangenabschnitt 2 sind durch einen Doppelpfeil 21 die axialen Schaltbewegungen und durch einen drehenden Pfeil 22 die Wählbewegungen die vom Handschalthebel herkommen angedeutet.

Wird also durch eine Schaltbewegung am Handschalthebel der Schaltstangenabschnitt 2 zur Vorwahl der Schaltgasse radial gedreht, so wird diese Drehbewegung über den elastischen Dämpfungsstreifen 16 klapperfrei auf den Schaltstangenabschnitt 1 übertragen. Durch die nachfolgende axiale Einrückbewegung des Schaltstangenabschnittes 2 belastet die Anschlagscheibe 6 den Dämpfungskörper 9 und dieser überträgt in abgedämpfter Form die Schaltbewegung auf die Anschlagscheibe 7 und somit den Schaltstangenabschnitt 1.

Die Auslegung der Dämpfungskörper 8 und 9 muß somit so getroffen werden, daß ein erwünschtes gutes Schaltgefühl bei der Betätigung des Handschalthebels erzielt wird. Selbstverständlich müssen die Endkanten 12 und 14 bzw. 13 und 15 zwischen den Schaltstangenabschnitten 1 und 2 mit ausreichendem Abstand angeordnet werden, damit sie die Funktion der Dämpfungskörper 8 und 9 nicht beeinträchtigen.

Die radiale Ausdehnung der Dämpfungskörper 8 und 9 und die Dicke der elastischen Dämpfungsstreifen 16 kann so gewählt werden, daß die beiden Halbschalen 3 und 4 etwas nach aussen federn und daher das rohrförmige Verbindungsglied 17 die Halbschalen 3 und 4 bzw. die Schaltstangenabschnitte 1 und 2 spiel- und klapperfrei faßt. Zwischen den Schaltstangenabschnitten 1 und 2 und dem Verbindungsglied 17 ist eine entsprechende Schmierung vorzusehen.

## Patentansprüche

1. Getriebeschaltstange mit Schwingungsdämpfer, insbesondere für Kraftfahrzeuge, bestehend aus
- zwei miteinander fluchtenden, rohrförmigen Schaltstangenabschnitten (1, 2), die axiale und drehende Schaltbewegungen übertragen,
- an den Schaltstangenabschnitten angeordneten elastischen Federelementen und
- einem die beiden Schaltstangenabschnitte unter Zwischenschaltung der elastischen Federelemente axial umfassenden rohrförmigen Verbindungsglied (17),
**dadurch gekennzeichnet,** daß
- die miteinander fluchtenden, rohrförmigen Schaltstangenabschnitte (1 und 2) einander über eine bestimmte Länge überlappend angeordnet sind, indem sie wechselseitig hälftig ausgeschnitten sind und zylindrische Halbschalen ( 3 und 4) bilden,
- in der einen Halbschale (4) des einen Schaltstangenabschnittes (2) zwei in einem bestimmten Abstand angeordnete, etwa kreisförmige Anschlagscheiben (5 und 6) befestigt sind,
- in der anderen Halbschale (3) eine in der Mitte zwischen den beiden anderen Anschlagscheiben (5 und 6) angeordnete etwa kreisförmige Anschlagscheibe (7) befestigt ist,
- in den zwischen den Anschlagscheiben (5 und 7 bzw. 7 und 6) gebildeten Räumen elastische Dämpfungskörper (8 und 9) in Kegel-, Zylinder- oder Kugelform angeordnet sind und
- die beiden Schaltstangenabschnitte (1 und 2) über einen zwischen den Längskanten (10 und 11) der Halbschalen (3 und 4) angeordneten, elastischen Dämpfungsstreifen (16) aneinanderliegen.

2. Getriebeschaltstange mit Schwingungsdämpfer nach Anspruch 1,
**dadurch gekennzeichnet,** daß
- der elastische Dämpfungsstreifen (16) in Draufsicht eine rechteckige Rahmenform aufweist.

3. Getriebeschaltstange mit Schwingungsdämpfer nach den Ansprüchen 1 und 2,
**dadurch gekennzeichnet,** daß
- die beiden Dämpfungskörper (8 und 9) mit dem rahmenförmigen Dämpfungsstreifen (16) als ein Teil aus elastischem Material derart zusammenhängend hergestellt sind, daß sie bei der Montage als ein Bauteil eingesetzt werden können, sie ihre unterschiedliche Funktion jedoch unbeeinträchtigt beibehalten.

## Claims

1. A gear-shift rod with a vibration damper, in particular for motor vehicles, consisting of two mutually aligned tubular shift rod portions (1, 2), which transmit axial and rotary shift movements, elastic spring elements arranged on the shift rod portions and a tubular connecting element (17) axially surrounding the two shift rod portions with interposition of the elastic spring elements, characterised in that the mutually aligned tubular shift rod portions (1 and 2) are arranged so as to overlap over a certain length in that they are half cut away alternately and form cylindrical half shells (3 and 4), two substantially circular stop discs (5 and 6) arranged with a certain spacing are fastened in one half shell (4) of one shift rod portion (2), one substantially circular stop disc (7) arranged in the centre between the other two stop discs (5 and 6) is fastened in the other half shell (3), elastic damping members (8 and 9) of conical, cylindrical or spherical shape are arranged in the spaces formed between the stop discs (5 and 7 and 7 and 6), and the two shift rod portions (1 and 2) rest against one another via an elastic damping strip (16) arranged between the longitudinal edges (10 and 11) of the half shells (3 and 4).

2. A gear-shift rod with a vibration damper according to claim 1, characterised in that the elastic damping strip (16) has a rectangular outline in a plan view.

3. A gear-shift rod with a vibration damper according to claims 1 and 2, characterised in that the two damping members (8 and 9) are produced integrally with the frame-shaped damping strip (16) as one part made of elastic material such that they can be inserted as one component during assembly but retain their different roles without impairment.

## Revendications

1. Tringle de commande de changement de vitesses munie d'amortisseurs de vibrations, en particulier pour véhicules automobiles, comprenant
- deux tronçons de tringle (1, 2) tubulaires mutuellement alignés, qui transmettent des mouvements axiaux et rotatifs de commande de changement de vitesses,
- des éléments de ressort élastiques disposés sur les tronçons de tringle et
- un organe tubulaire de liaison (17) entourant coaxialement les deux tronçons de tringle avec interposition des éléments de ressort élastiques,
caractérisée en ce que
- les tronçons de tringle (1 et 2) tubulaires, mutuellement alignés, sont disposés à recouvrement sur une certaine longueur, du fait qu'ils sont alternativement découpés pour moitié et forment des demicoquilles cylindriques (3 et 4),
- deux disques d'arrêt (5 et 6) à peu près circulaires sont fixés à une certaine distance l'un de l'autre dans la demi-coquille (4) d'un tronçon de tringle (2),
- un disque d'arrêt (7) à peu près circulaire est fixé dans l'autre demi-coquille (3), au milieu entre les deux autres disques d'arrêt (5 et 6),
- des corps élastiques d'amortissement (8 et 9), de forme conique, cylindrique ou sphérique, sont disposés dans les espaces délimités entre les disques d'arrêt (5 et 7 ou 7 et 6) et
- les deux tronçons de tringle (1 et 2) s'appliquent l'un contre l'autre par l'intermédiaire d'une bande élastique d'amortissement (16) disposée entre les bords longitudinaux (10 et 11) des demi-coquilles (3 et 4).

2. Tringle de commande de changement de vitesses munie d'amortisseurs de vibrations selon la revendication 1,
caractérisée en ce que la bande élastique d'amortissement (16) présente la forme d'un cadre rectangulaire vue en plan.

3. Tringle de commande de changement de vitesses munie d'amortisseurs de vibrations selon les revendications 1 et 2,
caractérisée en ce que
- les deux corps d'amortissement (8 et 9) et la bande d'amortissement (16) en forme de cadre sont réalisés attachés ensemble en une seule pièce, de manière qu'ils puissent être mis en place comme un composant unique lors de l'assemblage, tout en conservant leurs différentes fonctions sans qu'elles soient affectées.
